# EUROPÄISCHE PATENTSCHRIFT

(11) **EP 1 172 315 B1**
(45) Veröffentlichungstag und Bekanntmachung des Hinweises auf die Patenterteilung: **03.03.2004**
(21) Anmeldenummer: 01120434.4
(22) Anmeldetag: 04.11.1998
(51) Int. Cl.: B65G 69/18

(54) **Vorrichtung zum Übertragen fliessfähigen Materials**
Device for transferring flowable materials
Dispositif pour transférer des produits fluides

(43) Veröffentlichungstag der Anmeldung: 16.01.2002
(62) Teilanmeldung aus: 98120899.4
(73) Patentinhaber: AT Anlagetechnik AG, 3186 Düdingen (CH)
(72) Erfinder: Nussbaumer, Arthur, CH 3186 Düdingen (CH); Scheuwly, Markus, CH 3186 Düdingen (CH)
(74) Vertreter: Révy von Belvárd, Peter

(56) Entgegenhaltungen:
- EP-A- 0 847 946
- WO-A-94/19265
- WO-A-98/46505

## Beschreibung

Die Erfindung bezieht sich auf eine Vorrichtung zum Übertragen fliessfähigen Materials nach dem Oberbegriff des Anspruches 1 sowie auf ein Verschlussmittel nach Anspruch 8.

Eine derartige Vorrichtung ist aus der US-A-5,351,864 bekannt geworden. Darin ersetzt die Saugeinrichtung andere, bekannte Einrichtungen, wie etwa einen den Deckel abhebenden Magneten nach der DE-B-1 188 882 oder auch mechanische Abhebeeinrichtungen, etwa nach der EP-A-0 847 946. All diesen bekannten Abhebeeinrichtungen ist aber gemeinsam, dass zwar einerseits der Deckel automatisch - und in der Annahme eines klaglosen Funktionierens - erfolgen soll, dass aber anderseits durch nichts gesichert oder überwacht wird, dass dem auch wirklich so ist. Dabei ist es an sich gleichgültig, ob es sich bei dem fliessfähigen Material um flüssiges Material oder um Schüttgut handelt, obwohl der letztere Fall für diese Art des Übertragens fliessfähigen Materials die Regel sein wird. Auch wird es sich bei dem vom Deckel abschliessbaren Übernahmeteil im allgemeinen um einen Zwischenbehälter (meist "IBC" = Intermediate Bulk Container) handeln, obwohl es sich dabei etwa um die Füllöffnung eines Abfüllschlauches handeln könnte, wie es in der EP-A-0 384 826 beschrieben ist.

Beispielsweise lassen sich drei klassische Fälle für die Vorrichtung nach der US-A-5,351,864 darlegen, bei der es zu einem Versagen kommt und kommen muss:
- Der Saugnapf ist abgenützt und/oder besitzt ein Loch, so dass sich der zum Abheben des Deckels nötige Saugdruck nicht aufbauen kann. Dies wird - je nach der Abrasivität des fliessfähigen Materials, den Betriebsbedingungen und der Betriebsdauer - regelmässig nach einer gewissen Betriebsdauer auftreten.
- Der Deckel ist mit Schüttgut oder anderem fliessfähigem Material verunreinigt, so dass der Saugnapf keinen festen Halt findet und daher der Deckel nicht abgehoben wird.
- Der Deckel liegt nicht völlig gerade bzw. nicht völlig senkrecht zur Betätigungsachse, so dass der Saugnapf nicht gleichmässig an ihm anliegt.

Dies lässt sich besonders auch an Hand der WO 94/19265, worauf der Oberbegriff der Ansprüche 1 und 8 basiert, und der WO 98/46505 zeigen. Bei letzterer, beispielsweise, ist ein Saugnapf - zum Schutz vor Staub - relativ tief im Inneren des Verschlussgliedes untergebracht. Damit es den Deckel des Behälters überhaupt zu ergreifen vermag, muss dieser aufgewölbt sein, um nach oben in das Innere des Verschlussgliedes einzudringen. Diese Aufwölbung hat aber ihre Grenzen. Es ist aus den Zeichnungen der WO ersichtlich, dass der Saugnapf bei seiner Anlage an den Deckel (mit gutem Grund) praktisch nicht zusammengepresst wird, d.h. es genügt eine geringe Toleranz, und das Ansaugen ist nicht mehr gesichert. Zwar könnte man sich vielleicht vorstellen, den Saugnapf länger zu machen, so dass er elefantenrüsselartig vorsteht und damit sicher an der Oberfläche des Deckels anliegt. Dies aber zeigt gerade den Nachteil (und den Grund für die kurze Bemessung des Saugnapfes), da der Saugnapf jedenfalls und zwangsläufig einen geringeren Durchmesser als das Verschlussglied besitzt. Die oben geschilderte Gefahr des Verkantens ist also bei diesem Stand der Technik vorgegeben.

Dazu kommt noch die folgende, an die obigen Ausführungen anknüpfende Überlegung: der Deckel ist ja Teil eines Transportbehälters IBC. Solche Transportbehälter sind, naturgemäss, nicht immer völlig rein zu halten und sind den schweren Bedingungen des Industriealltages ausgesetzt. Es kann somit leicht am Deckel zu einer Ansammlung von Schüttgut kommen, welche ein fehlerloses Ansaugen verhindert, wie es auch möglich ist, dass der Deckel - der ja nicht von allzu schwerer Bauart sein darf - im Betrieb leicht eingebeult wird, was wiederum ein gutes Ansaugen verhindert, da ja dann Teile der Fläche des Deckels nicht völlig gerade liegen, wie eingangs hervorgehoben). Der im Verschlussorgan vorstehende Saugrüssel erschwert aber auch die Reinigung der inneren Verschlusselementes.

Der Erfindung liegt daher die Aufgabe zugrunde, die oben geschilderten Funktionsfehler wirksam zu vermeiden, und dies gelingt erfindungsgemäss durch die kennzeichnenden Merkmale des Anspruches 1.

Demnach wird das Verschlussmittel selbst als am Deckel angreifender und diesen ansaugender Teil ausgebildet sein und ist so im wesentlichen in seinem gesamten Inneren vom Saugdruck beaufschlagt, da der dichtende Umfangsring (wie noch gezeigt wird, muss dieser nicht am äussersten Umfang liegen) das Ansaugen über einen über dem Deckel befindlichen Hohlraum des Verschlussorganes sichert. Dennoch kann das Verschlussmittel zusätzlich einen Saugnapf nach Anspruch 2 besitzen, der an seiner Unterseite dann als eine Art Dichtung wirkt. Wesentlich ist also nur das selbst als Saugnapf ausgebildete Verschlussmittel im Bereiche seiner dem Deckel zugekehrten Randzone ein, gegebenenfalls elastisches Dichtungsmaterial in Form eines Umfangsringes aufweist, welches mit dem Deckel in Eingriff bzw. an diesen zur Anlage bringbar ist und dies kann beispielsweise im Sinne des Anspruches 2 erfolgen.

Denn durch die etwa akkordeonartige Abwechslung von Erweiterung und verengter Falte eine grössere Flexibilität, die der Sicherheit des Ergreifens bei Deckeln jeglicher Gestaltung, also auch bei flachen Deckeln, durchaus zuträglich ist. Denn die grössere Biegsamkeit ermöglicht es, dass der Saugnapf auch dort einen Fehlangriff am Deckel elastisch ausgleicht, wo einer der oben beschriebenen Mängel gegeben ist. Anderseits wird man einen solchen Saugnapf - schon aus Platzgründen - nur von begrenzter Länge ausführen können, so dass der Deckel nach dem Abheben sicher gerade bzw. senkrecht zur Betätigungsachse gehalten wird und so ein Verkanten beim Aufsetzen bzw. Schliessen des Deckels gar nicht zu befürchten ist, zumal hier - im Gegensatz zum Stand der Technik - der Saugnapf ja vornehmlich Dichtungsaufgaben hat.

Bevorzugt ist es allerdings, wenn das Verschlussmittel wenigstens zum Teil eine erste Konusfläche aufweist, wie dies an sich bekannt ist, hier aber einen besonderen Vorteil erbringen kann, wenn der Deckel eine, zweckmässig komplementäre, in die Konusfläche des Verschlussmittels ragende zweite Konusfläche besitzt. In einem solchen Falle können Dichtfläche und Gegendichtfläche jeweils an den beiden Konusflächen ausgebildet sein.

Es versteht sich, dass also die Erfindung nach der obigen Definition das Zusammenwirken des Behälters und seines Verschlussmittels mit dem Deckel eines an ihm andockenden Übernahmeteils betrifft. Da aber, wie oben dargelegt, die erfindungsgemässe Ausgestaltung im wesentlichen das Verschlussmittel betrifft und ein Behälter mit einem solchen Verschlussmittel - auch ohne Übernahmeteil - eine Handelsware darstellt, bezieht sich die Erfindung auch auf ein Verschlussmittel nach Anspruch 8.

An diesem Verschlussmittel ist - bei fehlendem Übernahmeteil - zu erkennen, dass es mit einer Saugleitung verbunden ist, durch welche ein Saugdruck in das Innere des Verschlussmittels einleitbar ist, und dass das Verschlussmittel mindestens einen um die Betätigungsachse ausgebildeten Umfangsring aufweist, welcher zu einer Abdichtung befähigt ist. Kriterium ist dabei, dass der Umfangsring fähig wäre, mit einer Gegen-Dichtungsfläche eines mit ihm zu verbindenden Deckels in Eingriff zu gelangen, wobei der Umfangsring gegebenenfalls ein elastisches Material aufweist.

Das Überraschende an der erfindungsgemässen Lösung ist, dass damit gleich eine Mehrzahl von Vorteilen erreicht wird, denn
- die Konstruktion wird durch Wegfall des bisher üblichen Mechanismus vereinfacht. Es braucht ja lediglich der Deckel beim Andocken so weit an das Verschlussmittel gebracht werden, dass dieses den Deckel anzusaugen vermag;
- damit entfallen Fehlermöglichkeiten, mögliche Reparaturen am, nun nicht mehr vorhandenen, Mechanismus, und die gesamte Konstruktion kann kostengünstiger hergestellt werden;
- die Reinigung der Innenfläche des Verschlussmittels wird erleichtert;
- da der Saugdruck - statt auf einen schmalen, weichen Saugrüssel zu wirken - den ganzen Innenraum des aus festem Material hergestellten Verschlussmittels beaufschlagt, ist auch die Anwendung höheren Saugdruckes möglich, womit - und dies durch den dichtenden Umfangsring gesichert - auch ein verlässliches Ansaugen gewährleistet ist;
- da also das gesamte Verschlussmittel zum Ansaugen herangezogen wird, wird sich im allgemeinen ein wesentlich grösserer Querschnitt der dem Deckel zugekehrten Saugöffnung ergeben als beim Stand der Technik, so dass der Deckel in seiner Lage sicherer definiert ist, als bei einem beschränkten, kleineren Querschnitt, wie er in der genannten U.S.-Patentschrift ersichtlich ist, bei welchem nur eine geringe Abweichung von einem streng senkrecht zur Betätigungsachse liegenden Deckel dessen Ränder durch Hebelübersetzung eine grosse Abweichung von der SOLL-Lage erfahren;

Weitere Einzelheiten der Erfindung ergeben sich an Hand der nachfolgenden Beschreibung von in der Zeichnung schematisch dargestellten Ausführungsbeispielen. Es zeigen:
- Fig. 1: einen Längsschnitt durch einen bei der Erfindung zur Anwendung kommenden Behälter mit einer herkömmlichen Ausführungsform einer Abhebeeinrichtung für den Angriff am Deckel eines angedockten Übernahmebehälters od.dgl.;
- Fig. 2: eine erste Variante einer erfindungsgemässen Abhebeeinrichtung, und
- Fig. 3: eine weitere, bevorzugte Variante dieser Abhebeeinrichtung.

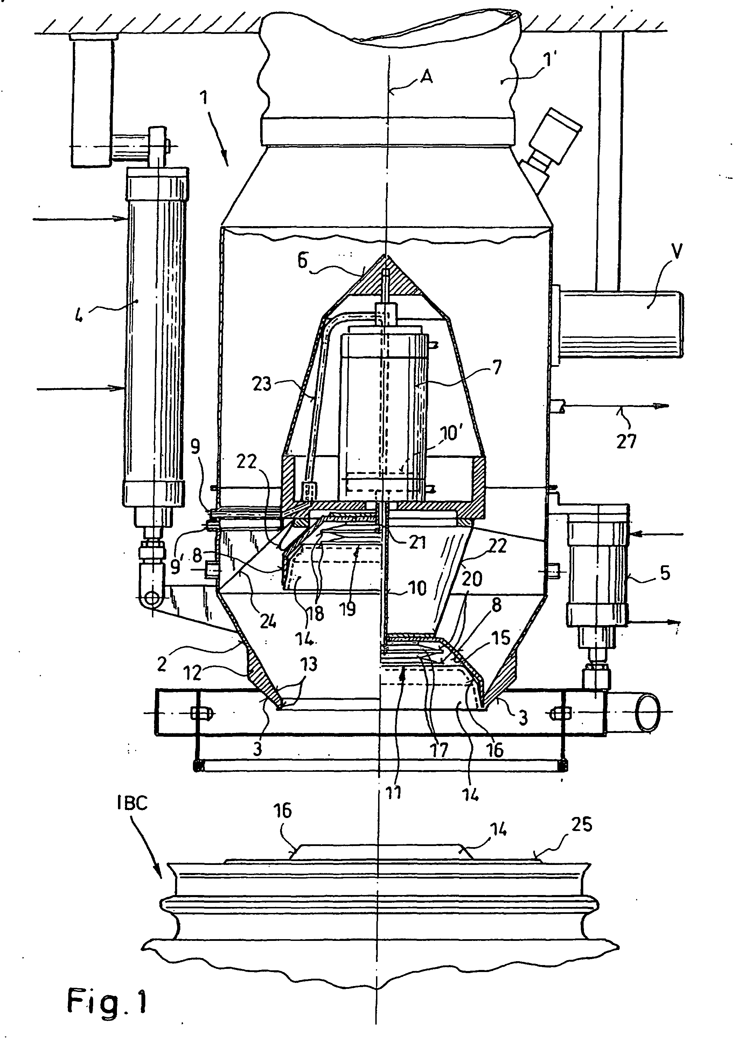

Gemäss Fig. 1 ist ein Behälter 1 für fliessfähiges Material, insbesondere für Schüttgut, vorgesehen, dem über eine Leitung 1' fliessfähiges Material zugeführt wird, und der an seinem unteren Ende einen Auslass 2 sowie eine etwa ringförmige Andockfläche 3 zum dichten Anlagen eines unter dem Behälter 1 mit seinem Oberteil angedeuteten Zwischentransportbehälters IBC oder eines das fliessfähige Gut übernehmenden Schlauches aufweist. Die Andockfläche 3 ist, wie ersichtlich, gegebenenfalls von an eine Ringleitung angeschlossenen Blasdüsen zum Reinigen umgeben. Beim Entleeren wird dann der Behälter 1 gegebenenfalls mit Hilfe eines Vibrators V gerüttelt. Der jeweilige Übernahmeteil kann mit Hilfe von Zylinderaggregaten 4, 5 an diese Andockfläche 3 herangezogen werden. Die Andockfläche 3 befindet sich vorzugsweise im Bereiche des Auslasses 2, doch kann sie sich auch etwas weiter oben befinden, wenn etwa der jeweilige Übernahmeteil bis höher hinauf gezogen wird.

Im Inneren des Behälters 1 ist ein von über seinen Umfang verteilten Streben 24 (nur eine ist in Fig. 1 sichtbar) gehaltener Kegel 6 vorgesehen, unter welchem sich ein Betätigungsorgan, wie ein Zylinderaggregat 7, ein Hubbalg oder ein Zylinder mit einer Rollmembrane, zum Betätigen eines etwa topfförmigen Verschlussgliedes 8 entlang einer vertikalen Betätigungsachse A gegen Einwirkungen des fliessfähigen Gutes bei seinem Ausfliessen ebenso gesichert ist, wie entsprechende pneumatische Zu- und/oder Ableitungen 9, 9'. Der ganze Bereich oberhalb des Verschlussgliedes 8 ist gegen Einwirkungen des fliessfähigen Materials durch eine Abdeckschürze 22, z.B. aus Kunststoffmaterial, abgedichtet, deren unterer Rand am Verschlussglied 8 befestigt ist, so dass sie sich bei der Aufwärtsbewegung des Verschlussgliedes 8 in der gezeigten Weise zusammenfaltet.

Durch dieses Zylinderaggregat 7 ist eine Kolbenstange 10 auf- und abbewegbar, welche zwei Funktionen ausübt: Einerseits ist daran das Verschlussglied 8 selbst auf- und abbewegbar, und anderseits wird mit dieser Kolbenstange 10 auch ein erfindungsgemäss ausgebildeter Saugnapf 11 mit doppelter Falte mitbewegt. In Fig. 1 zeigt die Seite links der Betätigungsachse A (die hier, allerdings nicht notwendigerweise, gleichzeitig die Längsachse des Behälters 1 ist) das Verschlussglied 8 in seiner Offenstellung, wogegen die rechte Seite die Geschlossenstellung veranschaulicht, in welcher das Verschlussglied 8 mit der Innenfläche 13 eines Dichtungselementes 12 zusammenwirkt. Dieses Dichtungselement 12 bildet nach aussen hin gleichzeitig die Andockfläche 3.

In dieser zuletzt erwähnten Geschlossenstellung liegt der Saugnapf 11 einem den jeweiligen Übernahmeteil abdeckenden Deckel 14 gegenüber. An sich wäre es möglich, das Zylinderaggregat 7 als Doppelzylinder auszubilden, bei dem etwa ein äusserer von zwei etwa konzentrischen Zylindern zur Betätigung des Verschlussgliedes 8 dient, wogegen der jeweilige innere Zylinder eine Relativbewegung des Saugnapfes 11 gegenüber dem Verschlussglied bewirken kann, wodurch der Saugnapf 11 nach dem Bewegen des Verschlussgliedes 8 in die in Fig. 1 rechts gezeigte Geschlossenstellung noch weiter auf einen in einem Abstand darunter liegenden Deckel 14 des Übernahmeteiles abgesenkt werden kann. Solche Doppelzylinder sind an sich bekannt, wobei der äussere Zylinder einen Ringkolben und eine hohle Kolbenstange aufweist, in der die innere Kolbenstange des inneren Zylinders geführt ist. Aus dieser Überlegung ist die vorteilhafte Doppelfunktion des Zylinders 7 als Betätigungseinrichtung für das Verschlussglied 7 und als Abhebeeinrichtung für den Deckel 14 ersichtlich. Wenn daher diese Einrichtungen im Zuge dieser Beschreibung und in den Ansprüchen gesondert genannt sind, so soll im Auge behalten werden, dass sie von einer einzigen, gemeinsamen Einrichtung gebildet sein können, wenn auch die Abhebeeinrichtung eine Saugleitung mit umfasst, die noch beschrieben wird.

Die Konstruktion wird aber wesentlich vereinfacht, wenn, wie dargestellt, der Saugnapf 11 im Moment des Endes der Bewegung des Verschlussgliedes 8 auch schon an der Oberfläche des Deckels 14 anliegt, weil dann ja nur ein einfaches Zylinderaggregat 7 nötig ist, welches dem oben erwähnten doppelten Zweck dient. Um dies leichter zu erreichen, ist es vorteilhaft, wenn der Deckel 14 in der dargestellten Weise eine, zweckmässig komplementäre, in eine Konusfläche 15 des Verschlussgliedes 8 ragende zweite Konusfläche 16 besitzt. Es versteht sich, dass die beiden Konusflächen 15, 16 nicht unbedingt komplementär sein, d.h. gleiche Winkel zur Betätigungsachse A haben, müssen. Kleine Abweichungen der Winkellage schadet nichts, wenn es auch bevorzugt ist, wenn die Winkellage einander ergänzend ist, weil dann diese Flächen nicht etwa nur entlang einer Linie aneinander liegen und sich so jeweils eine Dichtungsfläche und eine Gegen-Dichtungsfläche ausbildet, entlang derer die Innenfläche des Verschlussgliedes 8 und die Aussenfläche des Deckels 14 dichtend aneinanderliegen. Dies kann in der später beschriebenen, erfindungsgemässen Weise noch dazu ausgenützt werden, den Saugnapf 11 völlig wegzulassen und damit die Konstruktion weiter zu vereinfachen und betriebssicherer zu gestalten.

Wie ersichtlich, weist der Saugnapf eine balgartige Konfiguration mit zwei Verengungen 17 auf, die abwechselnd mit Erweiterungen 18 zur Bildung von Falten vorgesehen sind. Dies verleiht dem Saugnapf 11 eine besondere Flexibilität, so dass sich der seine untere Saugöffnung 19 begrenzende Rand leichter an Unebenheiten des Deckels, an durch seine eigene Abnützung verursachte Unebenheiten des Randes oder an eine durch am Deckel aufliegendes Schüttgut verursachte Unebenheiten anpassen und damit trotz dieser misslichen Umstände der Angriff des Saugnapfes 11 am Deckel 14 und das Anheben des Deckels 14 aus der rechts gezeigten Geschlossenstellung in die links gezeigte, angehobene Offenstellung gesichert wird. Gerade diese Anpassbarkeit kann, bei einem so kleinen Querschnitt des Saugnapfes 11 leicht zu einer winkelmässigen Abweicheung gegenüber einer Horizontalebene und damit zu einem schlechten Sitz führen.

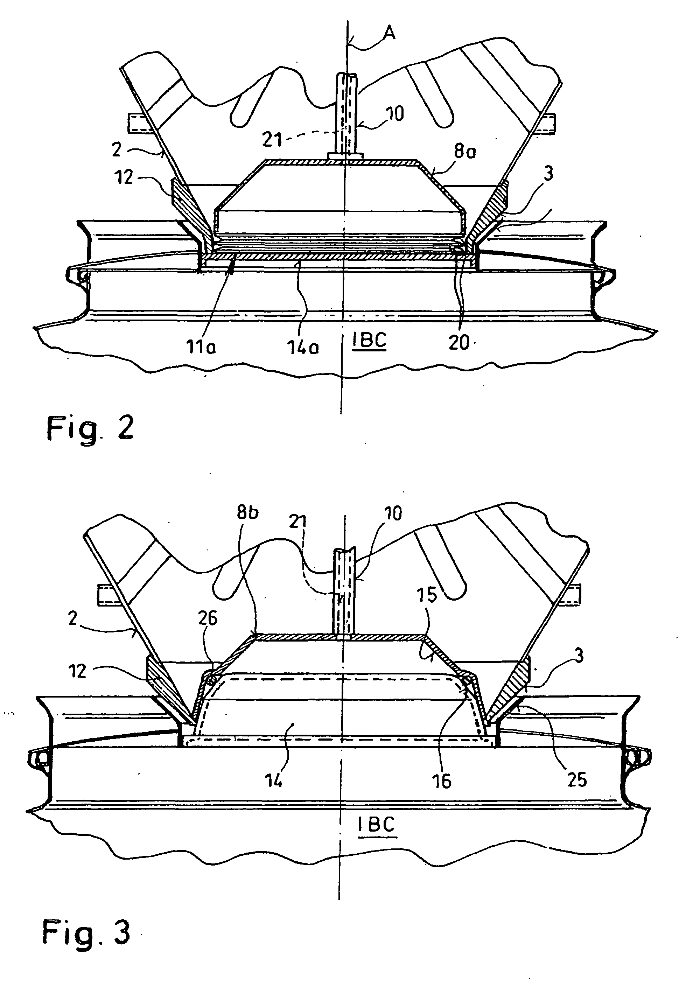

In Fig. 1 sind zwei von Verengungen und einer dazwischenliegenden Erweiterung gebildete Falten 20 des Saugnapfes 11 gezeigt. Werden mehr als drei solcher Falten 20 vorgesehen, so wird der Saugnapf 11, wie sich gezeigt hat, meist zu weich und kann dann rüsselartig und pendelnd herabhängen, so dass auf Grund seiner unbestimmten, durch Vibrationen leicht zu beeinflussenden Lage wiederum sein Angriff am Deckel nicht so leicht gesichert sein mag, wenn dieses Verhalten nicht durch geeignete Wahl eines steiferen Materials gebessert wird. Da aber steiferes Material sich weniger gut für die vorliegenden Anforderungen eignet, ist es bevorzugt, wenn der elastische Saugnapf 11, wie er auch im Falle der Fig. 2 angewandt wird, nicht mehr als drei verengte Falten 20, vorzugsweise nicht mehr als zwei Verengungen 17, aufweist. Der Unterdruck wird zum Saugnapf 11 von einem (nicht dargestellten, an sich bekannten) Vakuumaggregat, wie einem Sauggebläse, einem Injektor oder einer Pumpe, über eine Saugleitung 21 herangeführt, die zweckmässig wenigstens zum Teil als Bohrung innerhalb der betätigenden Kolbenstange 10 eines Kolbens 10' ausgeführt ist, zu welcher der Unterdruck über eine an ihr vorgesehenen Radialbohrung, einen entsprechenden Anschlussnippel und einen mit der Leitung 9 in Verbindung stehenden Schlauch 23 herangeführt sein mag.

Die erfindungsgemässe Verbesserung dieser Anordnung ist aus Fig. 2 ersichtlich, in der eine Ausführungsvariante des gleichzeitig als Abhebeeinrichtung für einen ebenen Deckel 14a ausgebildeten Verschlussgliedes 8a im Detail unter Weglassung der übrigen Behälterteile dargestellt ist. Dabei haben Teile gleicher Funktion dieselben Bezugszeichen wie in Fig. 1, Teile bloss ähnlicher Funktion tragen dieselben Bezugsziffem, jedoch unter Zusatz eines Buchstaben.

Demnach ist das Verschlussglied 8a selbst als Teil eines mit der Saugleitung 21 verbundenen Saugnapfes ausgebildet, der an seinem unteren Ende einen elastischen Saugnapf 11 a besitzen mag, der bevorzugt ebenso mindestens eine Falte 20 aufweist, wie im Stande der Technik nach Fig. 1. Dieser elastische Saugnapf 11a vermag sich auch an einen ebenen Deckel 14a zu legen und wirkt hier eher als Dichtglied. Dadurch, dass aber die auf den Deckel 14a wirkende Querschnittsfläche grösser ist, ist ein Verkanten bzw. Verkippen des Deckels 14a weniger leicht möglich und dieser wird sicherer in seiner Lage senkrecht zur Betätigungsachse A gehalten. Damit ist aber auch ein sicheres Aufsetzen des Deckels nach dem Befüllen des IBC gewährleistet. Es versteht sich, dass zusätzlich zum Saugnapf 11a auch noch ein Saugnapf 11 nach Fig. 1 oder einer nach dem Stande der Technik verwendet werden könnte, so dass der jeweilige Deckel 14 bzw. 14a aussen und innen gehalten wird. Dies wird aber im allgemeinen nicht notwendig sein, da schon die dargestellte Anordnung dafür sorgt, dass der Angriff der Abhebeeinrichtung 11a, 21 am Deckel 14a weitgehend gesichert ist.

Noch einfacher und sicherer wird jedoch das Abheben und Aufsetzen eines Deckels 14, wenn die Konstruktion nach Fig. 3 verwendet wird. Dabei fehlt jeglicher elastische Saugnapf, vielmehr wird eine Konfiguration verwendet, bei der Verschlussglied 8b und Deckel 14 unmittelbar mit dem Andocken des IBC und eines Halsrandes 25 desselben an der Andockfläche 3 des Dichtungselementes 12 in dichtende Berührung gelangen. Das bedeutet wiederum, dass mindestens die Konusflächen 15 und 16 als Dichtungsfläche und Gegen-Dichtungsfläche wirken, wobei vorzugsweise wenigstens eine dieser Dichtungsflächen ein elastisches Dichtungselement, insbesondere einen Umfangsring 26, trägt.

Durch die Konusflächen 15, 16 ergibt sich bereits ein verstärktes, dichtes Ineinanderpressen der beiden Teile 8b und 14. Dabei wirken die Konusflächen einerseits im Sinne einer zunehmenden Verstärkung des Saugeffektes, je tiefer der Deckel 14 in das Verschlussglied 8b eindringt, anderseits ergibt sich auch eine automatische Zentrierung und horizontale Ausrichtung des Deckels, so dass später beim neuerlichen Aufsetzen desselben Verkantungen auf einfache Weise vermieden sind.

Ist dann noch ein elastisches Dichtungselement 26 vorgesehen, so haften die beiden Teile 8b, 14 unter Sogwirkung über die Saugleitung 21 dicht aneinander, ohne dass es des bisher im Stande der Technik vorgesehenen Mechanismus bedarf. Dies bedeutet, dass eine solche Konstruktion nicht nur einfacher und kostengünstiger herzustellen ist, sondern auch wegen der grösseren Angriffsfläche ein sichereres Abheben, Halten und Aufsetzen des Deckels 14 ermöglicht, als dies bisher der Fall war. Die zu Beginn dieser Beschreibung erwähnten Unzukömmlichkeiten und Mängel werden damit grösstenteils behoben.

## Patentansprüche

1. Vorrichtung zum Übertragen fliessfähigen Materials, mit einem Behälter (1) für das fliessfähige Material, der mit einem Auslass (2) und mindestens einer Andockfläche (3) zum Andocken einer normalerweise von einem Deckel (14; 14a; 14b) abgeschlossenen Füllöffnung eines Übernahmeteils versehen ist, welcher Auslass (2) mit Hilfe eines Verschlussmittels (8) mit innerer Konusfläche (15) zu öffnen oder zu verschliessen ist, das mittels einer Betätigungseinrichtung (7) entlang einer Betätigungsachse (A) aus einer Offenstellung in eine Geschlossenstellung bringbar ist, und welcher Deckel (14; 14a; 14b) mit Hilfe einer an ihm angreifenden, mit Saugdruck wirkenden Abhebeeinrichtung (11, 21) zur Freigabe der Füllöffnung abhebbar ist, wobei das Verschlussmittel (8) selbst als am Deckel (14a; 14b) augreifenden Teil ausgebildet ist **dadurch gekennzeichnet, dass** das Verschlussmittel (8) selbst als den Deckel (14a; 14b) ansaugender Teil ausgebildet ist, und dass dem Verschlussmittel (8) ein dichtender Umfangsring (11a, 12, 26) zum Abdichten gegenüber dem Deckel (14; 14a; 14b) zugeordnet ist.

2. Vorrichtung nach Anspruch 1, **dadurch gekennzeichnet, dass** das Verschlussmittel (8) an seinem unteren Ende einen elastischen Saugnapf (11a) besitzt und dieser mit einer Saugöffnung derart ausgebildet ist, dass er sich von der Saugöffnung weg zur Bildung mindestens einer Falte (20) verengt und anschliessend wenigstens noch einmal erweitert, wobei der elastische Saugnapf (11a) nicht mehr als drei verengte Falten (20), vorzugsweise nicht mehr als zwei Verengungen (17), aufweist (Fig. 2).

3. Vorrichtung nach Anspruch 1 oder 2, **dadurch gekennzeichnet, dass** das Verschlussmittel (8) überdies mindestens eine, vorzugsweise ringförmig um die Betätigungsachse (A) ausgebildete, Dichtungsfläche (15) aufweist, die mit einer Gegen-Dichtungsfläche (16) des Deckels (14; 14a; 14b) in Eingriff bringbar ist.

4. Vorrichtung nach einem der vorhergehenden Ansprüche, **dadurch gekennzeichnet, dass** das Verschlussmittel (8) wenigstens zum Teil eine erste Konusfläche (15) aufweist.

5. Vorrichtung nach Anspruch 4, **dadurch gekennzeichnet, dass** der Deckel (14) eine, zweckmässig komplementäre, in die Konusfläche (15) des Verschlussmittels (8) ragende zweite Konusfläche (16) besitzt.

6. Vorrichtung nach Anspruch 5, **dadurch gekennzeichnet, dass** eine Dichtfläche und eine Gegendichtfläche jeweils an den beiden Konusflächen (15, 16) ausgebildet sind.

7. Vorrichtung nach Anspruch 6, **dadurch gekennzeichnet, dass** wenigstens eine dieser Konusflächen (15, 16) mindestens einen elastischen Dichtungs-Umfangsring (26) trägt.

8. Verschlussmittel (8) für eine Vorrichtung nach einem der vorhergehenden Ansprüche, das mittels einer Betätigungseinrichtung (7) entlang einer Betätigungsachse (A) aus einer Offenstellung in eine Geschlossenstellung bringbar ist, **dadurch gekennzeichnet, dass** es mit einer Saugleitung (21) verbunden ist, durch welche ein Saugdruck in das Innere des Verschlussmittels einleitbar ist, dass das Verschlussmittel (8) mindestens einen um die Betätigungsachse (A) ausgebildeten Umfangsring (11a, 12, 26) aufweist, der fähig ist, mit einer Gegen-Dichtungsfläche (16) eines mit ihm zu verbindenden Deckels (14; 14a; 14b) in Eingriff zu gelangen, und dass der Umfangsring (11a, 12, 26) gegebenenfalls ein elastisches Material aufweist.

9. Verschlussmittel (8) nach Anspruch 8, **dadurch gekennzeichnet, dass** die Dichtfläche an einer ersten Konusfläche (15) vorgesehen ist.

## Claims

1. A device for transferring flowable materials, comprising a container (1) for the flowable material, which container (1) is provided with an outlet (2) and at least one docking face (3) for docking to a filling aperture, normally obturated by a lid (14; 14a; 14b), of a receiving element, which outlet (2) is openable or closable by means of closure means (8) having an inner conical face (15), which closure means (8) are movable by means of an actuating arrangement (7) along an axis of actuation (A) from an open position to a closed position, and which lid (14; 14a; 14b) is upwardly removable by means of a lifting arrangement (11, 21) acting upon it and operating with suction pressure to open the filling aperture, the closure means (8) themselves taking the form of a part engaging with the lid (14a; 14b), **characterised in that** the closure means (8) themselves take the form of the part applying suction to the lid (14a; 14b), and **in that** a circumferential sealing ring (11a, 12, 26) for sealing with respect to the lid (14; 14a; 14b) is associated with the closure means (8).

2. A device according to claim 1, **characterised in that** the closure means (8) have at their lower end an elastic suction cup (11a) and the latter is configured with a suction aperture in such a way that it is narrowed in the direction away from the suction aperture to form at least one fold (20) and then is widened again at least once, the elastic suction cup (11a) having not more than three narrowed folds (20), preferably not more than that two narrowed portions (17) (Fig. 2).

3. A device according to claim 1 or 2, **characterised in that** the closure means (8) comprise in addition at least one sealing face (15) which is formed preferably annularly around the axis of actuation (A) and can be moved into engagement with an opposed sealing face (16) of the lid (14; 14a; 14b).

4. A device according to any one of the preceding claims, **characterised in that** the closure means (8) include at least partially a first conical face (15).

5. A device according to claim 4, **characterised in that** the lid (14) possesses an, advantageously complementary, second conical face (16) which projects into the conical face (15) of the closure means (8).

6. A device according to claim 5, **characterised in that** a sealing face and an opposed sealing face are formed respectively on the two conical faces (15, 16).

7. A device according to claim 6, **characterised in that** at least one of these conical faces (15, 16) carries at least one circumferential elastic sealing ring (26).

8. Closure means (8) for a device according to any one of the preceding claims, which is movable by means of an actuating arrangement (7) along an axis of actuation (A) from an open position to a closed position, **characterised in that** it is connected to a suction line (21) through which a suction pressure can be introduced into the interior of the closure means, **in that** the closure means (8) include at least one circumferential ring (11a, 12, 26) which is disposed around the axis of actuation (A) and which is able to move into engagement with an opposed sealing face (16) of a lid (14; 14a; 14b) to be connected thereto, and that said circumferential ring (11a, 12, 26) optionally includes an elastic material.

9. Closure means (8) according to claim 8, **characterised in that** the sealing face is provided on a first conical face (15).

## Revendications

1. Dispositif pour transférer des produits fluides, équipé d'un réservoir (1) pour le produit fluide muni d'une sortie (2) et d'au moins une surface d'arrimage (3) pour arrimer un orifice de remplissage d'une pièce de prise normalement fermée par un couvercle (14, 14a, 14b), laquelle sortie (2) pouvant être ouverte ou fermée par un moyen de fermeture (8), qui peut être amené d'une position ouverte à une position fermée le long d'un axe d'actionnement (A) au moyen d'un dispositif de commande (7), et dont le couvercle (14, 14a, 14b) peut être soulevé au moyen d'un dispositif de levage (11, 21) ayant prise sur lui et agissant avec la pression d'aspiration pour libérer l'orifice de remplissage, le moyen de fermeture (8) lui même étant formé comme la partie ayant prise sur le couvercle (14a; 14b), **caractérisé en ce que** le moyen de fermeture (8) lui même est formé comme cette partie, qui aspire le couvercle (14a; 14b), et qu'un anneau circonférentiel bouchant (11a, 12, 26) est associé au moyen de fermeture (8) pour boucher relativement au couvercle (14, 14a, 14b).

2. Dispositif selon la revendication 1, **caractérisé en ce que** le moyen de fermeture (8) possède une ventouse (11a) à son bout inférieur, dont l'ouïe d'aspiration est formée de manière, qu'il s'est rétréci à partir de l'ouïe d'aspiration pour former au moins un pli (20) et depuis s'élargi encore au moins une fois, la ventouse (11a) élastique ne comprenant plus de trois plis rétrécis (20), préférablement ne plus de deux rétrécissements (17) (Fig. 2).

3. Dispositif selon la revendication 1 ou 2, **caractérisé en ce que** le moyen de fermeture (8) possède de plus au moins une surface de bourrage (15), préférablement en forme d'anneau autour de l'axe d'actionnement (A), que peut être amenée en contact avec une contre-surface (16) du couvercle (14, 14a, 14b).

4. Dispositif selon une quelconque des revendications précédentes, **caractérisé en ce que** le moyen de fermeture (8) comprend, au moins partiellement, une première surface conique (15).

5. Dispositif selon la revendication 4, **caractérisé en ce que** le couvercle (14) possède une deuxième surface conique (16), convenablement complémentaire, qui s'élève dans la surface conique (15) du moyen de fermeture (8).

6. Dispositif selon la revendication 5, **caractérisé en ce qu'**une surface de bourrage et une contre-surface de bourrage sont formées chacune à une des deux surfaces coniques (15, 16) .

7. Dispositif selon la revendication 6, **caractérisé en ce qu'**au moins une de ces surfaces coniques (15, 16) porte au moins une bague élastique de bourrage (26).

8. Moyen de fermeture (8) pour un dispositif selon une quelconque des revendications précédentes, qui peut être amené d'une position ouverte à une position fermée le long d'un axe d'actionnement (A) au moyen d'un dispositif de commande (7), **caractérisé en ce, qu'**il est relié à un conduit d'aspiration (21), par lequel une pression d'aspiration peut être introduite dans l'intérieur du moyen de fermeture , **en ce que** le moyen de fermeture (8) comprend au moins un anneau circonférentiel (11a, 12, 26) formé autour de l'axe d'actionnement (A), qui est capable d'être amené en contact avec une contre-surface (16) d'un couvercle (14, 14a, 14b) à être relié avec celui-ci, et que l'anneau circonférentiel (11a, 12, 26), le cas échéant, comprend un matériau élastique.

9. Moyen de fermeture (8) selon la revendication 8, **caractérisé en ce que** la surface de bourrage est prévue à une première surface conique (15).
